# EUROPÄISCHE PATENTSCHRIFT

(11) **EP 0 829 384 B1**
(45) Veröffentlichungstag und Bekanntmachung des Hinweises auf die Patenterteilung: **15.03.2000**
(21) Anmeldenummer: 97115440.6
(22) Anmeldetag: 06.09.1997
(51) Int. Cl.: B60J 10/12

(54) **Deckel für ein Fahrzeugdach**
Panel for motor vehicle roof
Panneau pour toit de véhicule

(30) Priorität: 17.09.1996 DE 19637793
(43) Veröffentlichungstag der Anmeldung: 18.03.1998
(73) Patentinhaber: Webasto Systemkomponenten GmbH, 82131 Stockdorf (DE)
(72) Erfinder: Schmidhuber, Horst, 86938 Schondorf (DE)
(74) Vertreter: Wiese, Gerhard

(56) Entgegenhaltungen:
- EP-A- 0 429 361
- EP-A- 0 687 586
- DE-A- 3 742 719

## Beschreibung

Die Erfindung bezieht sich auf einen Deckel zum Verschließen einer Dachöffnung in einer festen Dachfläche eines Fahrzeugs, mit einer Deckelplatte und einem angeschäumten Kunststoffelement, in welches mindestens ein Verstärkungselement und/oder ein Befestigungselement eingeschäumt ist.

Ein solcher gattungsgemäß ausgebildeter Deckel ist beispielsweise aus DE-90 16 831 U1 bekannt. Bei diesem als Glasdeckel ausgebildeten Deckel sind an den Schmalseiten des Deckels Stahleinleger zur Anbringung von Befestigungselementen und an den Längsseiten Verstärkungsprofile aus Glasfasermaterial in ein als Dichtung ausgebildetes Kunststoffelement aus Polyurethan eingeschäumt.

Ein weiterer gattungsgemäß ausgebildeter Deckel ist aus DE 42 38 714 C1 bekannt, wobei an den als Glasdeckel ausgebildeten Deckel Verstärkungsprofile aus Stahl mittels eines Kunststoffelements aus Polyurethan angeschäumt sind. Ähnliche Deckel sind aus DE 43 11 049 C1 und EP 0 429 361 B1 bekannt.

Nachteilig bei den bekannten Deckeln ist der relativ hohe Verbrauch an kostspieligem Ausschäummaterial (derzeit ca. 13 DM pro kg).

Es ist Aufgabe der vorliegenden Erfindung, einen Deckel der eingangs genannten Art für ein Fahrzeugdach zu schaffen, welcher kostengünstig hergestellt werden kann und dennoch von hoher Zuverlässigkeit im Betrieb ist, insbesondere stabil und bruchsicher ist.

Diese Aufgabe wird erfindungsgemäß dadurch gelöst, daß mindestens ein Füllkörper in das Kunststoffelement eingeschäumt ist. Weitere bevorzugte Ausgestaltungen der Erfindung ergeben sich aus den Unteransprüchen.

Bei dieser erfindungsgemäßen Lösung ist vorteilhaft, daß bei jedem Deckel das Volumen des für das Kunststoffelement verwendeten Ausschäummaterials um das Volumen des Füllkörpers bzw. der Füllkörper verringert wird.

In weiterer vorteilhafter Ausgestaltung der Erfindung ist vorgesehen, daß der Füllkörper durch unmittelbare Anlage an der Deckelplatte und dem Verstärkungselement komprimiert ist und als Abstandshalter zwischen Deckelplatte und Verstärkungslement dient, um einen Kontakt zwischen Deckelplatte und Verstärkungsblech zu verhindern. Dies verringert die Bruchgefahr des Deckels, insbesondere wenn die Deckelplatte aus Glas gefertigt ist. Ferner ermöglicht diese Ausführungsform ein besonders einfaches Ausschäumverfahren, da das Verstärkungselement auf einfache Weise in der Ausschäumform fixiert werden kann.

In bevorzugter Ausführung ist vorgesehen, daß der Füllkörper eine geometrische Form aufweist, die geeignet ist, durch Einwirkung auf den Schäumprozeß die Menge von Lufteinschlüssen in dem Kunststoffelement zu steuern. Dies hat den Vorteil, daß auf einfache Weise der Anteil an Lufteinschlüssen in dem Kunststoffelement gezielt beeinflußt werden kann, beispielsweise um die Zahl der Lufteinschlüsse minimal zu halten.

Das Kunststoffelement besteht vorzugsweise aus Polyurethan, weil dies ein kostengünstiger und gut zu verarbeitender Werkstoff ist. Der Füllkörper besteht vorzugsweise aus recycliertem Polyurethan, Styropor oder extrudierten Kunststoffen, denn diese Stoffe sind kostengünstig, mit dem Polyurethan des Kunststoffelements verträglich und gehen in optimaler Weise mit diesem eine Verbindung ein.

Im folgenden sind zwei Ausführungsformen der Erfindung anhand der Zeichenungen näher erläutert. Es zeigen:
- FIG. 1: die Draufsicht auf einen Deckel für ein Fahrzeugdach in einer ersten Ausführungsform;
- FIG. 2: die Querschnittansicht entlang der Linie II-II in FIG. 1; und
- FIG. 3: eine zweite Ausführungsform in einer Ansicht entsprechend FIG. 2.

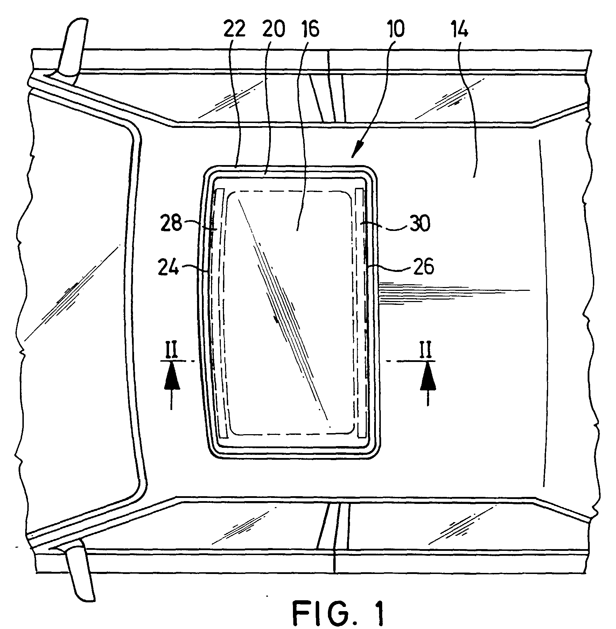

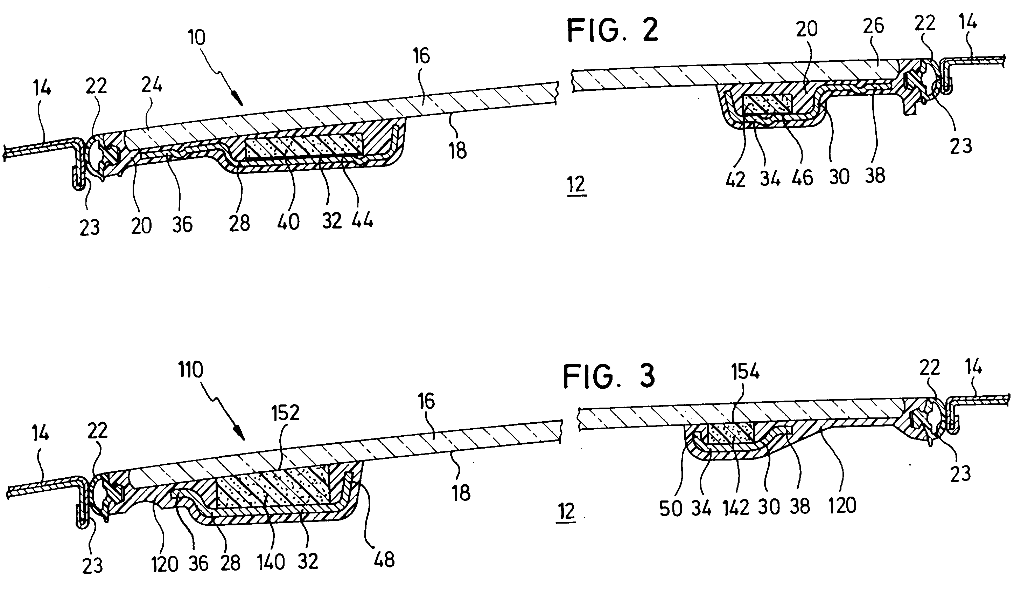

In FIG. 1 und 2 ist ein Deckel 10 in Schließstellung gezeigt, der eine Öffnung 12 in einer festen Dachfläche 14 verschließt. Der Deckel 10 weist eine transparente Deckelplatte 16 aus Glas auf, an deren Unterseite 18 ein Kunststoffelement 20 aus Polyurethan angeschäumt ist. An dem Kunststoffelement 20 ist seitlich eine um den Deckel 10 umlaufende Dichtung 22 befestigt, die in Schließstellung dichtend an dem Rand 23 der Dachöffnung 12 anliegt. Der Deckel 10 kann durch eine geeignete, nicht dargestellte Verstellmechanik aus der gezeigten Schließstellung zu Entlüftungszwecken in eine oder mehrere Öffnungsstellungen gebracht werden, um die Dachöffnung 12 ganz oder teilweise freizulegen. In das Kunststoffelement 20 ist an dem vorderen Rand 24 und an dem hinteren Rand 26 des Deckels 10 jeweils ein vorderes Verstärkungselement 28 bzw. ein hinteres Verstärkungselement 30 eingeschäumt, um in bekannter Weise für eine Verstärkung und Versteifung der Deckelplatte 16 zu sorgen und in den seitlichen Bereichen eine Anlenkung der Verstellmechanik zu ermöglichen. Die Verstärkungselemente 28 und 30 sind als Profilbleche ausgeführt und bestehen vorzugsweise aus Stahl. Die Verstärkungsbleche weisen jeweils einen trogförmigen Abschnitt 32 bzw. 34 und zum vorderen bzw. hinteren Deckelrand 24 bzw. 26 hin einen flachen Abschnitt 36 bzw. 38 auf.

Zwischen den Verstärkungsblechen (Elemente 28 und 30) ist jeweils ein Füllkörper 40 bzw. 42 aus Polyurethan in dem trogförmigen Abschnitt 32 bzw. 34 der Verstärkungsbleche in das Kunststoffelement 20 mit eingeschäumt. Der Querschnitt der Füllkörper 40 bzw. 42 ist im wesentlichen rechteckig, und die Füllkörper erstrecken sich etwa über die gesamte Länge der Verstärkungselemente 28 bzw. 30. Die Füllkörper 40 und 42 werden vor dem Einschäumen mit ihrer Unterseite 44 bzw. 46 auf dem Verstärkungsblech mittels einer selbstklebenden Folie (nicht gezeigt) befestigt, so daß sie auch nach dem Einschäumen mit ihrer Unterseite 44 bzw. 46 an dem Verstärkungsblech (Elemente 28 bzw. 30) anliegen. Die Folie kann dabei über die gesamte Unterseite 44 bzw. 46 oder nur einen Teil davon verlaufen. Abgesehen von der Unterseite 44 bzw. 46 sind die Füllkörper 40 und 42 nach dem Einschäumen vollständig von Ausschäummaterial ummantelt.

Weder die Verstärkungsbleche (Elemente 28, 30) noch die Füllkörper 40 und 42 liegen an der Deckelplatte 16 an. Dies wird durch entsprechende Vorkehrungen beim Ausschäumvorgang sichergestellt. Die Abmessungen der Füllkörper 40 und 42 sind so gewählt, daß sie den von den trogförmigen Abschnitten 32 bzw. 34 gebildeten Trog weitgehend ausfüllen, um ein entsprechendes Volumen an Ausschäummaterial zu verdrängen und somit die Herstellungskosten des Deckels zu verringern. Das für die Füllkörper 40 und 42 gewählte Material sollte mit dem Ausschäummaterial, d.h. dem Material des Kunststoffelements 20, verträglich sein und mit diesem in optimaler Weise eine Verbindung eingehen. Für Polyurethan als Ausschäummaterial kommen als Füllkörpermaterial beispielsweise neben Polyurethan Styropor oder extrudierte Kunststoffe in Frage, wobei letztere insbesondere dann sehr kostengünstig sind, wenn Recycling-Material verwendet wird. Die Füllkörper sollten vorzugsweise eine Dichte von etwa 55 bis 90 kg/m³ in Abhängigkeit von dem Ausschäumsystem und der Ausschäumgeometrie sowie dem Innendruck des Ausschäumwerkzeugs aufweisen.

FIG. 3 zeigt eine alternative Ausführungsform der Füllkörper. Gleiche Elemente sind mit denselben Bezugszeichen wie in FIG. 1 und 2 bezeichnet. Im Unterschied zu der Ausführungsform gemäß FIG. 1 und 2 sind zwei Füllkörper 140 und 142 in ihrer Höhenabmesung so ausgelegt, daß sie über den Rand 48 und 50 bzw. über die flachen Abschnitte 36 und 38 der tragförmigen Abschnitte des jeweiligen Verstärkungselementes soweit nach oben überstehen, daß sie mit ihrer Oberseite 152 bzw. 154 an der Unterseite 18 der Deckelplatte 16 anliegen. Die Füllkörper 140 und 142 befinden sich beim Schäumvorgang in der Form in komprimiertem Zustand.

Der Deckel 110 gemäß FIG. 3 wird in einem Ausschäumwerkzeug hergestellt, das eine Unterform aufweist, in welche die Verstärkungselemente 28 und 30 eingelegt werden, wobei diese auf definierten Punktauflagen mit einem Durchmesser von vorzugsweise 1,5 mm auf der Unterform aufliegen. Die Verstärkungselemente 28, 30 können dabei auf einfache Weise mittels kleiner Markierungspunkte (nicht gezeigt) in der Ausschäumform fixiert werden. In dem trogförmigen Bereich (Abschnitte 32, 34) der Verstärkungselemente 28 und 30 liegen die Füllkörper 140 und 142 direkt auf den Verstärkungsblechen auf, wobei im Gegegensatz zu der Ausführungsform gemäß FIG. 1 und 2 auf eine Klebeverbindung verzichtet wird. Die Deckelplatte 16 aus Glas liegt mit ihrer Unterseite 18 direkt auf den Oberseiten 152 und 154 der Füllkörper 140 und 142 auf. Die Deckelplatte 16 übt in dem Ausschäumwerkzeug eine Kraft nach unten auf die Füllkörper 140 und 142 aus, so daß diese komprimiert werden, jedoch nicht so stark, daß die Unterseite 18 der Deckelplatte 16 zur Anlage an den Verstärkungselementen 28 und 30 gelangen könnte. Durch die Kompression werden die Füllkörper 140 und 142 in dem Ausschäumwerkzeug während des Ausschäumens ohne eine Klebeverbindung an Ort und Stelle gehalten. Die Füllkörper 140 und 142 wirken in dieser Ausführungsform als Abstandshalter zwischen den Verstärkungsblechen und der Deckelplatte 16 und verhindern einen direkten Kontakt zwischen diesen Bauteilen. Dies ist insofern wichtig, als ein direkter Kontakt zwischen den Verstärkungselementen 28 und 30 und der Deckelplatte 16 zu einer Bruchgefahr der Deckelplatte aus Glas führen könnte. Nach dem Ausschäumen verbleiben die Füllkörper 140 und 142 durch die Bindungswirkung des Kunststoffelements 120 in dem komprimierten Zustand.

Bei den dargestellten Ausführungsformen ist die geometrische Form der Füllkörper bevorzugt so gestaltet ist, daß die Füllkörper während des Ausschäumvorganges im Schäumwerkzeug die Fließwege und Fließquerschnitte für das Ausschäummaterial so festlegen, daß das Ergebnis des Ausschäumvorgangs gezielt beeinflußt wird, vor allem hinsichtlich der sich ergebenden Lufteinschlüsse in dem Kunststoffelement. Insbesondere können auf diese Weise auch die Lufteinschlüsse in dem Kunststoffelement minimiert werden, was hinsichtlich der Stabilität und Belastbarkeit desselben im allgemeinen von Vorteil ist. Das Einbringen eines Füllkörpers in das Kunststoffelement bietet somit eine einfache Möglichkeit, den Ausschäumvorgang gezielt zu steuern.

Die Erfindung ist nicht auf die Verwendung mit reinen Verstärkungselementen beschränkt, sondern sie kann auch mit Befestigungselementen verwendet werden, die in das Kunststoffelement eingeschäumt sind, um eine Möglichkeit zur Befestigung des Deckels an einer Mechanik zum Verstellen des Deckels zu schaffen.

### Bezugszeichenliste

- Deckel: **10**
- Dachöffnung: **12**
- Dachfläche: **14**
- Deckelplatte: **16**
- Unterseite von 16: **18**
- Kunststoffelement: **20, 120**
- Dichtung: **22**
- Rand von 12: **23**
- vorderer Rand von 10: **24**
- hinterer Rand von 10: **26**
- Verstärkungsblech: **28, 30**
- trogförmiger Bereich von 28, 30: **32, 34**
- flacher Bereich von 28, 30: **36, 38**
- Füllkörper: **40, 42, 140, 142**
- Unterseite von 40, 42: **44, 46**

- Oberseite von 140, 142: **152, 154**

## Patentansprüche

1. Deckel zum Verschließen einer Dachöffnung (12) in einer festen Dachfläche (14) eines Fahrzeugs, mit einer Deckelplatte (16) und einem angeschäumten Kunststoffelement (20 bzw. 120), in welches mindestens ein Verstärkungselement (28 bzw. 30) und/oder ein Befestigungselement eingeschäumt ist, **dadurch gekennzeichnet,** daß zusätzlich mindestens ein Füllkörper (40, 42, 140 bzw. 142) in das Kunststoffelement (20 bzw. 120) eingeschäumt ist.

2. Deckel nach Anspruch 1, **dadurch gekennzeichnet**, daß am vorderen Rand (24) und am hinteren Rand (26) des Deckels in das Kunststoffelement (20 bzw. 120) jeweils ein Verstärkungselement (28 bzw. 30) eingeschäumt ist.

3. Deckel nach Anspruch 2, **dadurch gekennzeichnet**, daß in das Kunststoffelement (20 bzw. 120) jeweils ein Füllkörper (40, 42, 140 bzw. 142) zwischen jedem Verstärkungselement (28 bzw. 30) und der Deckelplatte (16) eingeschäumt ist.

4. Deckel nach Anspruch 3, **dadurch gekennzeichnet**, daß der Füllkörper (40 bzw. 42) mit seiner Unterseite (44 bzw. 46) an dem Verstärkungselement (28 bzw. 30) anliegt, ansonsten jedoch umschäumt ist.

5. Deckel nach Anspruch 4, **dadurch gekennzeichnet**, daß der Füllkörper (40 bzw. 42) bei dem Ausschäumen jeweils mittels einer selbstklebenden Folie an dem Verstärkungselement (28 bzw. 30) befestigt ist.

6. Deckel nach Anspruch 3, **dadurch gekennzeichnet**, daß der Füllkörper (140 bzw. 142) durch unmittelbare Anlage an der Deckelplatte (16) und dem Verstärkungselement (28 bzw. 30) komprimiert ist.

7. Deckel nach Anspruch 6, **dadurch gekennzeichnet**, daß der Füllkörper (140 bzw. 142) als Abstandshalter zwischen der Deckelplatte (16) und dem Verstärkungselement (28 bzw. 30) dient und einen Kontakt zwischen Deckelplatte und Verstärkungsblech verhindert.

8. Deckel nach einem der vorhergehenden Ansprüche, **dadurch gekennzeichnet**, daß das Kunststoffelement (20 bzw. 120) aus Polyurethan besteht.

9. Deckel nach Anspruch 8, **dadurch gekennzeichnet**, daß der Füllkörper (40, 42, 140 bzw. 142) aus Polyurethan, Styropor oder extrudierten Kunststoffen besteht.

10. Deckel nach einem der vorhergehenden Ansprüche, **dadurch gekennzeichnet**, daß der Füllkörper (40, 42, 140 bzw. 142) aus einem Material mit einer Dichte von 55 bis 90 kg/m³ besteht.

11. Deckel nach einem der vorhergehenden Ansprüche, **dadurch gekennzeichnet**, daß der Füllkörper (40, 42, 140 bzw. 142) eine geometrische Form aufweist, die geeignet ist, durch Einwirkung auf den Schäumprozeß Lufteinschlüsse in dem Kunststoffelement zu steuern.

12. Deckel nach einem der vorhergehenden Ansprüche, **dadurch gekennzeichnet**, daß das (die) Verstärkungselement(e) (28 bzw. 30) als Verstärkungsblech(e) ausgeführt ist (sind).

13. Deckel nach einem der vorhergehenden Ansprüche, **dadurch gekennzeichnet**, daß die Deckelplatte (16) aus Glas besteht.

## Claims

1. A panel for occluding a roof aperture (12) in a fixed roof area (14) of a motor vehicle, with a cover plate (16) and, foamed onto it a synthetic plastics element (20; 120 respectively) into which there is foamed at least one reinforcing element (28; 30 respectively) and/or a fixing element, characterised in that in addition at least one filler (40, 42, 140; 142 respectively) is foamed into the synthetic plastics element (20; 120 respectively).

2. A panel according to Claim 1, characterised in that a reinforcing element (28; 30 respectively) is foamed into the synthetic plastics element (20; 120 respectively) at the front edge (24) and at the rear edge (26) of the panel.

3. A panel according to Claim 2, characterised in that a filler (40, 42, 140; 142 respectively) is foamed into the synthetic plastics element (20; 120 respectively) between each reinforcing element (28; 30 respectively) and the cover plate (16).

4. A panel according to Claim 3, characterised in that the filler (40; 42 respectively) has its underside (40; 46 respectively) bearing on the reinforcing element (28, 30) but otherwise has foam around it.

5. A panel according to Claim 4, characterised in that during foaming, the filler (40; 42 respectively) is fixed by a self-adhesive film on the reinforcing element (28; 30 respectively).

6. A panel according to Claim 3, characterised in that the filler (140; 142 respectively) is compressed by bearing directly on the cover plate (16) and the reinforcing element (28; 30 respectively).

7. A panel according to Claim 6, characterised in that the filler (140; 142 respectively) serves as a spacing means between the cover plate (16) and the reinforcing element (28; 30 respectively) and prevents contact between the cover plate and the reinforcing sheet.

8. A panel according to one of the preceding Claims, characterised in that the synthetic plastics element (20; 30 respectively) consists of polyurethane.

9. A panel according to Claim 8, characterised in that the filler (40, 42, 140; 142 respectively) consists of polyurethane, Styropor or extruded plastics.

10. A panel according to one of the preceding Claims, characterised in that the filler (40, 42, 140; 142 respectively) consists of a material having a density of 55 to 90 kg/m³.

11. A panel according to one of the preceding Claims, characterised in that the filler (40, 42, 140; 142 respectively) has a geometrical form which is suitable, by influencing the foaming process, for controlling air inclusions in the synthetic plastics element.

12. A panel according to one of the preceding Claims, characterised in that the reinforcing element(s) (28; 30 respectively) is (are) constructed as reinforcing sheet(s).

13. A panel according to one of the preceding Claims, characterised in that the cover plate (16) consists of glass.

## Revendications

1. Panneau de fermeture d'une ouverture (12) pratiquée dans un toit fixe (14) d'un véhicule, comportant une plaque de couverture (16) garnie d'un élément en matière plastique en mousse expansée (20, 120) et dans lequel est noyé au moins un élément renforçateur (28, 30) et/ou un élément de fixation,
caractérisé en ce que
dans l'élément en matière plastique en mousse expansée (20, 120) au moins un corps de remplissage (40, 42, 140, 142) supplémentaire est noyé dans la mousse.

2. Panneau de toit selon la revendication 1,
caractérisé en ce que
dans l'élément en matière plastique en mousse expansée (20, 120) le long du bord avant (24) et du bord arrière (26) du panneau, chaque fois un élément renforçateur (28, 30) est noyé dans la mousse.

3. Panneau de toit selon la revendication 2,
caractérisé en ce que
dans l'élément en matière plastique (20, 120) chaque fois un corps de remplissage (40, 42, 140, 142) est noyé dans la mousse expansée entre l'élément renforçateur (28, 30) correspondant et la plaque de couverture (16).

4. Panneau de toit selon la revendication 3,
caractérisé en ce que
le corps de remplissage (40, 42) est en contact par sa face inférieure (44, 46) avec l'élément renforçateur correspondant (28, 30), tout en étant entouré par ailleurs de mousse expansée.

5. Panneau de toit selon la revendication 4,
caractérisé en ce que
le corps de remplissage (40, 42), lors de la réalisation de la garniture en mousse expansée, est fixé sur l'organe renforçateur (28, 30) correspondant par une pellicule auto-adhésive.

6. Panneau de toit selon la revendication 3,
caractérisé en ce que
le corps de remplissage (140, 142) est comprimé en étant appliqué directement à la fois sur la plaque de couverture (16) et sur l'élément renforçateur (28, 30).

7. Panneau de toit selon la revendication 6,
caractérisé en ce que
le corps de remplissage (140, 142) joue le rôle d'espaceur entre la plaque de couverture (16) et l'élément renforçateur (28, 30) et interdit tout contact entre la plaque et l'élément renforçateur.

8. Panneau de toit selon l'une des revendications précédentes,
caractérisé en ce que
l'élément en matière plastique (20, 120) est en polyuréthane.

9. Panneau de toit selon la revendication 8,
caractérisé en ce que
le corps de remplissage (40, 42, 140, 142) est en polyuréthane, en styropore ou en matière plastique extrudée.

10. Panneau de toit selon l'une des revendications précédentes,
caractérisé en ce que
le corps de remplissage (40, 42, 140, 142) est fait d'un matériau ayant une densité de 55 à 90 kg/m³.

11. Panneau de toit selon l'une des revendications précédentes,
caractérisé en ce que
le corps de remplissage (40, 42, 140, 142) présente une forme géométrique qui agit sur le processus de réaction de la mousse expansée de façon à régler les inclusions d'air dans l'élément en matière plastique.

12. Panneau de toit selon l'une des revendications précédentes,
caractérisé en ce que
le (les) élément(s) renforçateur(s) (28, 30) est (sont) en tôle.

13. Panneau de toit selon l'une des revendications précédentes,
caractérisé en ce que
la plaque de couverture (16) est en verre.
